# FASCICULE DE BREVET EUROPEEN

(11) **EP 2 975 532 B1**
(45) Date de publication et mention de la délivrance du brevet: **27.03.2024**
(21) Numéro de dépôt: 15172806.0
(22) Date de dépôt: 18.06.2015
(51) Int. Cl.: G06F 15/177, G06F 9/54

(54) **PROCEDE D'ACCES A PLUSIEURS REGISTRES INTERNES D'UN SERVEUR**
ZUGRIFFSVERFAHREN AUF MEHRERE INTERNE REGISTER EINES SERVERS
METHOD FOR ACCESSING A PLURALITY OF INTERNAL REGISTERS OF A SERVER

(30) Priorité: 18.06.2014 FR 1455594
(43) Date de publication de la demande: 20.01.2016
(73) Titulaire: BULL, 78340 Les Clayes Sous Bois (FR)
(72) Inventeur: BRASSAC, Claude, 78100 Saint Germain en Laye (FR)
(74) Mandataire: Novagraaf Technologies

(56) Documents cités:
- EP-A2- 0 486 148
- US-A1- 2010 217 843
- US-A1- 2013 145 046
- US-B1- 6 665 731
- US-B1- 6 874 049
- Alexandre Scott: "Réaliser un programme puis une interface graphique unifiant et automatisant l'accès aux consoles des serveurs réels ou virtuels", Rapport d'ingénieur Stage de 2ème année, 4 septembre 2013 (2013-09-04), pages i-49, XP055168421, Extrait de l'Internet: URL:https://inspirehep.net/record/1296519/ files/CERN-THESIS-2013-105.pdf [extrait le 2015-02-09]
- Seshadri N Raghavendra Babu: "Using IPMItool raw commands for remote management of Dell PowerEdge Servers", , 1 novembre 2007 (2007-11-01), XP055168414, Extrait de l'Internet: URL:http://www.dell.com/downloads/global/p ower/ps4q07-20070387-Babu.pdf [extrait le 2015-02-09]

## Description

### DOMAINE DE L'INVENTION

L'invention concerne les procédés d'accès à plusieurs registres internes d'un serveur.

### CONTEXTE DE L'INVENTION

Selon un art antérieur, il est connu, pour un utilisateur externe à un serveur, de fournir directement au processeur de service gérant l'accès aux registres internes de ce serveur, des commandes d'accès dans un protocole de communication directement compréhensible par ce processeur de service.

Ceci est notamment connu du document US 6 665 731.

Cependant, l'utilisateur externe doit pour cela maîtriser non seulement les types de registres internes mais encore leur adresse, voire leur contenu ou leur format d'adressage, ainsi que le protocole de communication. Cela rend l'accès à ces registres internes relativement fastidieux pour l'utilisateur externe.

Par ailleurs, la moyenne des utilisateurs externes n'ayant pas forcément une maîtrise complète de l'ensemble de ces informations, le risque d'erreur est non négligeable.

### RESUME DE L'INVENTION

Le but de la présente invention est de fournir un procédé d'accès aux registres internes d'un serveur palliant au moins partiellement les inconvénients précités.

Plus particulièrement, l'invention vise à fournir un procédé d'accès aux registres internes d'un serveur qui d'une part ne nécessiterait plus une connaissance détaillée par l'utilisateur externe du protocole de communication directement compréhensible par le processeur de service et qui d'autre part ne nécessiterait plus non plus une connaissance détaillée par l'utilisateur externe de la structure de ces registres internes et de leur implémentation dans le serveur. Ceci dans le but de rendre l'accès de ces registres internes à l'utilisateur externe à la fois plus ergonomique et plus sûr, c'est-à-dire que cet accès aux registres internes devienne plus simple et présente un risque d'erreur supprimé ou à tout le moins fortement réduit.

Pour cela, l'invention, après avoir mis en évidence le caractère difficile de l'accès à ces registres internes par l'utilisateur externe et l'intérêt particulier qu'il pouvait y avoir à rendre ces registres internes accessibles même à un utilisateur externe qui ne soit un spécialiste ni du protocole de communication ni même de la structure et de l'implémentation de ces registres internes, propose à la fois de faire remonter vers une ou des couches de plus haut niveau du système des informations concernant la structure et l'implémentation de ces registres internes, et de prévoir au niveau de cette ou de ces couches de plus haut niveau un moyen de traduction de commandes d'un langage de relativement haut niveau vers ce protocole de communication.

La remontée de ces informations et l'implémentation d'un moyen de traduction représente l'effort d'une modification du système qui semble importante de prime abord mais qui est toutefois largement rentabilisée par la fluidité et la simplicité d'accès aux registres internes proposée avec l'invention à l'utilisateur externe au serveur, sans oublier la diminution substantielle du risque d'erreur, notamment au niveau d'un adressage incorrect de ces registres internes.

A cette fin, la présente invention propose un procédé d'accès à plusieurs registres internes d'un serveur, comprenant une transmission de commandes d'accès en provenance d'un utilisateur externe au serveur vers un processeur de service du serveur, par l'intermédiaire d'un protocole de communication directement compréhensible par ledit processeur de service, un accès dudit processeur de service, auxdits registres internes, par l'intermédiaire d'un ou de plusieurs protocoles d'accès auxdits registres internes, une transformation automatique de lignes de commande émises par ledit utilisateur en lesdites commandes d'accès dans ledit protocole de communication, par un ou plusieurs modules de service, le langage desdites lignes de commande étant de plus haut niveau que ledit protocole de communication, et en ce que ledit ou lesdits modules de service associent, aux noms desdits registres internes contenus dans lesdites lignes de commande, au moins les adresses correspondantes desdits registres internes, dans lesdites commandes d'accès, le procédé étant caractérisé en ce que, lors dudit accès dudit processeur de service auxdits registres internes, commandé par ledit utilisateur, un éventuel risque de collision avec un accès de surveillance, auxdits registres internes, commandé directement par ledit processeur de service afin de mettre à jour une copie du statut desdits registres internes, est géré par ledit processeur de service et en ce que le déroulement dudit accès de surveillance comprend au moins la succession d'une étape de reconfiguration d'un multiplexeur situé entre le processeur de service et lesdits registres internes et d'une étape de lecture d'au moins un desdits registres internes, et ledit risque de collision est évité en mettant en attente ledit accès commandé par ledit utilisateur pendant toutes les étapes du déroulement dudit accès de surveillance lequel ne sera pas interrompu.

Un accès à un registre interne du serveur est un accès en lecture ou un accès en écriture. Un registre interne du serveur est un registre interne d'un composant de calcul du serveur distinct d'une mémoire, le serveur comprenant des composants de calcul et des mémoires. Le caractère spécifiquement dédié du protocole de communication et le caractère relativement enfoui des informations relatives aux registres internes, ne prédisposaient pas à effectuer cette remontée vers les couches plus hautes du système.

Lors dudit accès dudit processeur de service auxdits registres internes, commandé par ledit utilisateur, un éventuel risque de collision avec un accès de surveillance, auxdits registres internes, commandé directement par ledit processeur de service afin de mettre à jour une copie du statut desdits registres internes, est géré par ledit processeur de service. Ainsi, le processeur de service recevant directement les deux types de demandes d'accès aux registres internes, celui en provenance de l'utilisateur externe comme celui en provenance du processus de surveillance, peut à son niveau gérer le risque de collision et ainsi le supprimer plus facilement.

A cette fin, la présente invention propose également une interface utilisateur, d'accès à plusieurs registres internes d'un serveur, adaptée pour transmettre des commandes d'accès en provenance d'un utilisateur externe au serveur vers un processeur de service du serveur, par l'intermédiaire d'un protocole de communication directement compréhensible par ledit processeur de service, pour accéder par ledit processeur de service, auxdits registres internes, par l'intermédiaire d'un ou de plusieurs protocoles d'accès auxdits registres internes, caractérisé en ce qu'elle comprend un ou plusieurs modules de service adaptés pour transformer automatiquement des lignes de commande émises par ledit utilisateur en lesdites commandes d'accès dans ledit protocole de communication, le langage desdites lignes de commande étant de plus haut niveau que ledit protocole de communication, et pour associer, aux noms desdits registres internes contenus dans lesdites lignes de commande, au moins les adresses correspondantes desdits registres internes, dans lesdites commandes d'accès.

Selon des modes de réalisation de l'invention, il est ainsi prévu de fournir aux utilisateurs externes une méthode d'accès simple, que ce soit en lecture ou en écriture, aux registres internes des composants de calcul d'un serveur.

Selon un mode de réalisation préférentiel de l'invention, il est ainsi prévu de fournir une interface de type ligne de commande pour pouvoir lire et écrire les registres internes de ces composants et donner également la possibilité d'écrire des scripts en fournissant des modules PYTHON à l'utilisateur externe.

Selon des modes de réalisation de l'invention, il est ainsi prévu de pouvoir réaliser ces accès sur une machine alors même que celle-ci est en exploitation.

Selon des modes de réalisation de l'invention, il est ainsi prévu de générer la liste exhaustive de tous les registres internes avec leur nom, leur adresse et la description de leur contenu, de fournir un langage de script avec des modules qui cachent à l'utilisateur, c'est-à-dire lui rendent transparent, tout ou partie des éléments suivants, parmi lesquels : la méthode d'accès à ces registres, la problématique des accès concurrents à ces registres dû au fait que la machine est en exploitation, l'adresse des registres et l'état de tension du serveur.

Suivant des modes de réalisation préférés, l'invention comprend une ou plusieurs des caractéristiques suivantes qui peuvent être utilisées séparément ou en combinaison partielle entre elles ou en combinaison totale entre elles, notamment avec l'un des objets précédents.

De préférence, ledit ou lesdits modules de service associent, aux noms desdits registres internes contenus dans lesdites lignes de commande, également les formats d'adressage correspondant auxdits registres internes, dans lesdites commandes d'accès. Ainsi, toutes les informations utiles pour permettre au processeur de service d'accéder aux registres internes du serveur sont intégrées dans les commandes d'accès et n'auront pas besoin d'être rajoutées dans une autre étape supplémentaire.

De préférence, au moins l'un desdits modules de service contient une liste des noms desdits registres internes associant, auxdits noms, les adresses correspondantes desdits registres internes, ladite liste comprenant de préférence tous lesdits registres internes susceptibles d'être accédés par ledit utilisateur, et, à chaque configuration du serveur, ladite liste est réactualisée. La réactualisation de la liste des registres internes à chaque configuration de serveur est particulièrement avantageuse, car elle garantit à l'utilisateur externe l'accès à tous les registres internes susceptibles de l'intéresser à tout moment, et ceci, même si à un moment donné, la structure ou l'implémentation d'un registre interne est modifiée. Dans le cas contraire, lors d'une telle modification, l'accès à ce registre interne ne pourrait avoir lieu tant qu'une opération de mise à jour de la modification de ce registre interne n'aurait pas été réalisée par ailleurs.

De préférence, ladite liste associe également, auxdits noms et auxdites adresses, la description de tous les bits desdits registres internes. Ainsi, non seulement l'accès aux registres internes est garanti à l'utilisateur externe, mais également des opérations fines, comme la modification ou l'analyse d'un bit particulier, lui sont rendues possibles.

Ledit risque de collision est évité en mettant en attente ledit accès commandé par ledit utilisateur pendant toutes les étapes du déroulement dudit accès de surveillance lequel ne sera pas interrompu. En effet, un léger retard pour un accès commandé par l'utilisateur externe n'a pas de conséquences graves, tandis qu'une perturbation mal contrôlée survenant en plein milieu du processus de surveillance peut notablement dégrader le fonctionnement du système.

Ledit déroulement dudit accès de surveillance comprend au moins la succession d'une étape de reconfiguration du multiplexeur situé entre le processeur de service et lesdits registres internes et d'une étape de lecture d'au moins un desdits registres internes. L'interruption du processus de surveillance qui surviendrait juste entre la reconfiguration du multiplexeur et la lecture, perturberait notablement le fonctionnement du système dans la mesure où c'est une autre demande d'accès, seule issue de l'utilisateur, qui hériterait de la reconfiguration prévue pour la demande d'accès du processus de surveillance.

De préférence, lesdites lignes de commande peuvent être regroupées dans un ou plusieurs scripts. Ainsi, la gestion de ces registres internes par l'utilisateur externe est rendue encore plus fluide pour cet utilisateur externe. Une interface en ligne de commande est une interface homme machine dans laquelle la communication entre l'utilisateur et son ordinateur est réalisée en mode texte, l'utilisateur tapant des commandes en texte et lisant des réponses en texte. Un script est un programme qui permet l'exécution de tâches, sans nécessiter de compilation, en se contentant d'une interprétation.

De préférence, les lignes de commande ne requièrent dudit utilisateur que le nom du registre interne à accéder, à l'exclusion de son adresse, de son format d'adresse, et de son mode d'accès. Ainsi, la gestion de ces registres internes par l'utilisateur externe est rendue encore plus simple pour cet utilisateur externe.

De préférence, en réponse à une desdites lignes de commandes dudit utilisateur, les valeurs des bits desdits registres internes sont affichées avec les noms de champs correspondant à ces bits. Ainsi, l'utilisateur externe peut vérifier, bit par bit pour chaque registre interne, que son contenu correspond bien à l'information qu'il s'attend à y trouver. Cette sécurité supplémentaire va permettre à l'utilisateur externe soit de remarquer immédiatement une modification dans la structure d'un registre interne qui ne lui aurait pas été préalablement présentée ou qui lui aurait échappé, soit de configurer finement un registre interne si besoin.

De préférence, le langage desdites lignes de commande est le langage PYTHON. Ce langage est particulièrement simple et fluide pour l'utilisateur externe, pour la gestion des registres internes du serveur. PYTHON est un langage de programmation connu, de haut niveau, à syntaxe réduite pour les lignes de commande, et particulièrement efficace dans un contexte de script.

De préférence, ledit protocole de communication est le protocole IPMI. Ce protocole de communication est particulièrement efficace pour réaliser les opérations voulues au niveau des registres internes du serveur. IPMI (pour « Intelligent Platform Management Interface » en langue anglaise) est une interface standardisée pour la gestion externe de systèmes informatiques, comme ici où un serveur peut être géré par un utilisateur externe au travers de l'ordinateur personnel de cet utilisateur externe.

De préférence, ledit protocole de communication IPMI circule sur un bus Ethernet. Le bus Ethernet est une passerelle particulièrement efficace pour transmettre les commandes en protocole IPMI entre l'ordinateur de type PC de l'utilisateur externe et le processeur de service du serveur.

De préférence, lesdits registres internes appartiennent à un ou plusieurs composants du serveur, un ou plusieurs CPU et ou un ou plusieurs ASIC et ou un ou plusieurs FPGA pouvant se trouver parmi lesdits composants. La grande variété de composants dont les registres internes sont susceptibles d'être gérés par l'utilisateur externe rend d'autant plus intéressant le procédé d'accès à ces registres internes proposé par l'invention, car ce procédé d'accès est simplifié et fluidifié.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple d'architecture logicielle implémentant la remontée vers les couches hautes, des informations relatives aux registres internes d'un serveur, pour le déroulement d'un procédé d'accès aux registres internes de ce serveur selon un mode de réalisation de l'invention.
La figure 2 représente schématiquement un exemple d'arborescence des classes d'objet pour le langage PYTHON correspondant à l'architecture logicielle de la figure 1, selon un mode de réalisation de l'invention.
La figure 3 représente schématiquement un exemple de diagramme des composants pour le langage PYTHON correspondant à l'architecture logicielle de la figure 1, selon un mode de réalisation de l'invention.
La figure 4 représente schématiquement un exemple de réponse à une ligne de commande de l'utilisateur externe, correspondant à l'architecture logicielle de la figure 1, selon un mode de réalisation de l'invention.

### DESCRIPTION DETAILLEE DE L'INVENTION

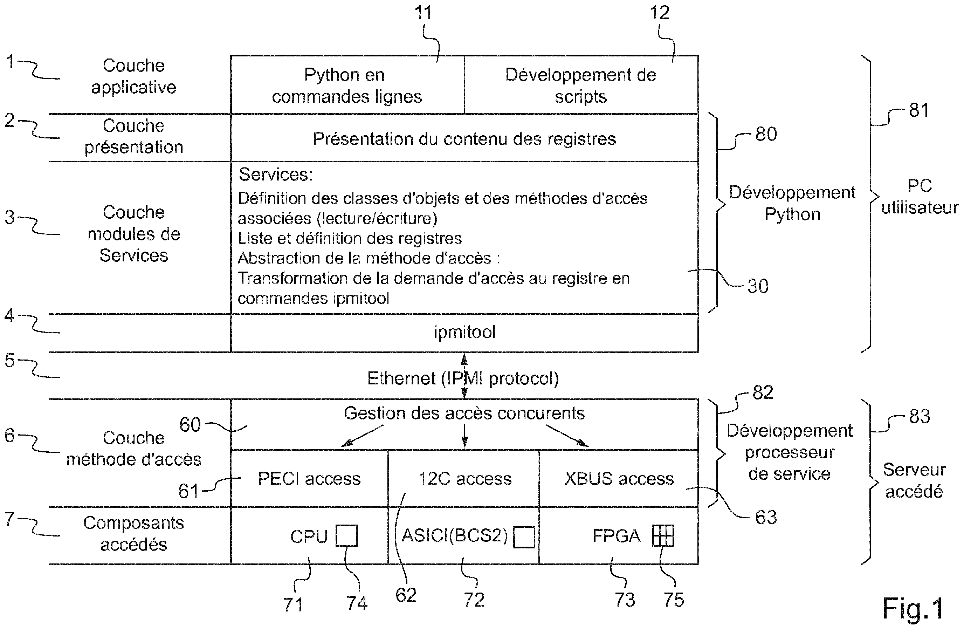

La figure 1 représente schématiquement un exemple d'architecture logicielle implémentant la remontée vers les couches hautes, des informations relatives aux registres internes d'un serveur, pour le déroulement d'un procédé d'accès aux registres internes de ce serveur selon un mode de réalisation de l'invention.

Le système informatique comprend plusieurs couches, s'étageant de la couche la plus basse correspondant aux composants du serveur lui-même à la couche la plus haute correspondant à l'interface avec l'utilisateur externe. Les couches s'étagent donc, de la plus basse à la plus haute, successivement : la couche 7 des composants accédés, la couche 6 de la méthode d'accès, la couche 5 du bus Ethernet, la couche 4 de la boîte à outils IPMI, la couche 3 des modules de service, la couche 2 de présentation, la couche 1 applicative.

La couche 7 des composants accédés comprend plusieurs types de composants 74 comprenant eux-mêmes un ou plusieurs registres internes 75. Ce sont ces registres internes 75 auquel l'utilisateur externe veut pouvoir accéder afin de les gérer et éventuellement de les modifier. La couche 7 des composants accédés comprend par exemple un composant 71 de type CPU (« Central Processing Unit » en langue anglaise), un composant 72 de type ASIC (« Application Spécifie Integrated Circuit » en langue anglaise), un composant 73 de type FPGA (« Field Programmable Gate Array » en langue anglaise).

La couche 6 de la méthode d'accès. Elle comprend la couche des protocoles d'accès 61 à 63, ainsi qu'une couche 60 de gestion des accès concurrents laquelle est située au-dessus de la couche des protocoles d'accès 61 à 63. Chacun des composants 71 à 73 est accédé par l'intermédiaire d'un protocole d'accès correspondant 61 à 63. Le composant 71 de type CPU est accédé par l'intermédiaire du protocole d'accès 61 « PECI access » standardisé (« Platform Environment Control Interface » en langue anglaise). Le composant 72 de type ASIC est accédé par l'intermédiaire du protocole d'accès 62 « I2C access » (« Inter Integrated Circuit » en langue anglaise). Le composant 73 de type FPGA est accédé par l'intermédiaire du protocole d'accès 63 « XBUS access » (« XBUS » étant une alternative à « MBUS »). Les protocoles d'accès 61 à 63 sont respectivement adaptés pour accéder aux composants 71 à 73.

La couche 60 de gestion des accès concurrents gère et évite le risque de collision dans le cas de plusieurs demandes d'accès concomitantes à un même composant. La couche 60 de gestion des accès concurrents établit une hiérarchie entre les demandes d'accès, une demande d'accès surveillance, destinée à mettre à jour la copie des registres internes du composant, étant plus prioritaire qu'une demande d'accès issue d'un utilisateur externe. La couche 6 de la méthode d'accès est entièrement gérée par le processeur de service 82.

De cette façon, ces accès ne sont ainsi pas intrusifs vis à vis du logiciel de surveillance qui s'exécute sur le processeur de service 82. Pour cela, le logiciel du processeur de service 82 gère les demandes d'accès concurrents aux composants de calcul 71 à 73 du serveur 83. Ces accès concurrents peuvent se produire soit entre les demandes d'accès registres internes du processeur de service et les demandes d'accès externes venant de l'utilisateur, soit entre deux utilisateurs qui font des demandes d'accès externes sur un même composant de calcul.

La couche 60 de gestion des accès concurrents non seulement gère les accès concurrents mais vérifie que ces accès peuvent être réalisés quel que soit l'état d'énergie du serveur 83. En effet, les accès au serveur 83 vont être rendus possibles sur une machine en exploitation, que celle-ci soit sous tension ou en veille. Pour cela, ces accès sont faits à travers le processeur de service 82 (« Management Controller » en langue anglaise) lequel sera en permanence alimenté au moins en veille et lequel se trouve sur la carte CPU du serveur 83.

Par ailleurs, ces accès ne seront pas intrusifs vis à vis des logiciels qui s'exécutent sur le serveur 83. Pour cela, ces accès sont faits à travers le processeur de service 82 en complète indépendance avec les autres processeurs utilisés par les applications clients.

La couche des protocoles d'accès 61 à 63 permet au processeur de service 82 de gérer les accès aux registres internes 74 des différents composants de calcul 71 à 73 de façon transparente pour l'utilisateur externe. Pour cela, le processeur de service 82 va tout d'abord fournir les pilotes nécessaires à chacun des composants de calcul 71 à 73 ainsi que la gestion de chacun de ces protocoles reliant ce processeur de service 82 à chacun des composants de calcul 71 à 73. Puis, le processeur de service 82 va gérer les accès concurrents aux composants de calcul 71 à 73 et va gérer en particulier le pilotage des interrupteurs permettant d'accéder aux composants de calcul 71 à 73. Ensuite, le processeur de service 82 va offrir une interface externe applicative de type IPMI qui est un standard dans la gestion des serveurs. Cette interface prend en entrée plusieurs informations, parmi lesquelles: le type de composant de calcul, son adresse, l'adresse du registre interne concerné et le mode d'accès en lecture et en écriture de ce registre interne.

La couche 5 du bus Ethernet permet une communication entre d'une part l'espace de l'ordinateur personnel 81 de l'utilisateur externe lequel comprend les couches 1 à 4 et d'autre part l'espace du serveur 83 auquel l'utilisateur externe veut accéder et lequel comprend les couches 6 et 7. La communication transitant sur ce bus Ethernet utilise le protocole IPMI.

La couche 4 de la boîte à outils IPMI permet d'encapsuler, dans des messages destinés à transiter sur le bus Ethernet de la couche 5, les commandes en langage IPMI provenant de la couche 3. La couche 4 de la boîte à outils IPMI permet aussi d'extraire, les réponses en langage IPMI provenant de la couche 6 et ayant transité sur le bus Ethernet de la couche 5.

La couche 3 des modules de service 30 réalise les tâches qui vont permettre aux lignes de commande de haut niveau provenant de l'utilisateur externe d'être transformées en commandes d'accès de plus bas niveau directement compréhensibles par le processeur de service 82.

Plusieurs tâches sont ainsi réalisées. D'abord la définition des classes d'objets et des méthodes d'accès qui leur sont associées, que ce soit en lecture ou bien en écriture.

Puis, la liste et la définition des registres internes auxquels l'utilisateur externe veut accéder. C'est en particulier cette liste des registres internes du serveur avec leur adresse et leur format d'adressage, ainsi qu'avec la description de chacun de leur bits, disposée à cet endroit, c'est-à-dire qui se trouve au niveau de cette couche élevée 3 de modules de service 30 dans l'espace ordinateur personnel 81 de l'utilisateur externe, qui permet d'une part d'accepter de l'utilisateur externe des lignes de commande de haut niveau qui soient de structure simple et d'autre part de ne modifier que légèrement le processeur de service 82 lequel ne comprend toujours directement que les commandes en langage IPMI. Opérer une modification profonde de la structure du processeur de service lui permettant d'accepter des commandes de plus haut niveau serait plus complexe et plus coûteuse que ne l'est l'implémentation, proposée par l'invention, des modules de service 30 dans l'espace ordinateur personnel 81 de l'utilisateur externe, laquelle implémentation facilite beaucoup le travail de l'utilisateur externe en le rendant plus ergonomique et plus simple grâce à la seule utilisation de simples lignes de commande dans un langage de haut niveau, par exemple le langage PYTHON.

Ensuite la transformation de la demande d'accès provenant de l'utilisateur externe sous format de lignes de commande en commandes IMPI à l'aide de la boîte à outils « IPMI-tool » disponible au niveau de la couche 4.

Pour cela, la couche 3 des modules de service 30 va générer et réactualiser à chaque reconfiguration du serveur 83, la liste exhaustive de tous les registres internes 74 de tous les composants de calcul 71 à 73, avec, pour chaque registre 74, le nom du registre, son adresse, et la description de son contenu, c'est-à-dire de chacun des bits 75 de ce registre interne 74.

L'ensemble de ces informations, qui est généré automatiquement à partir des outils de conception utilisés pour le développement du serveur 83, va permettre de garantir, pour l'utilisateur externe, à la fois l'exhaustivité des données dont il a besoin pour gérer les registres internes 74, leur viabilité au cours du temps, ce que permet leur mise à jour à chaque reconfiguration du serveur 83, la cohérence et l'universalité de ces informations pour l'ensemble des utilisateurs externes concernés par la gestion des mêmes registres internes 74, un gain de temps considérable pour le ou les utilisateurs externes n'ayant alors plus besoin de se référer aux documents de spécifications des différents composants de calcul pour trouver le nom et l'adresse de l'un ou l'autre des registres internes 74 en fonction de leurs besoins. De préférence, la liste des registres internes 74 des différents composants de calcul 71 à 73 est incluse dans les modules de service 30 fournis à l'utilisateur externe. Cette liste contient, pour chaque registre interne 74, le nom de ce registre interne 74, l'adresse de ce registre interne 74, ainsi que la description de chacun des bits 75 de ce registre interne 74.

La couche 2 de présentation est une couche qui met en forme les informations ayant remontées des registres internes 74, afin de les rendre ergonomiques et aisément compréhensibles pour l'utilisateur externe. Les couches 2 et 3 sont ici développées dans un langage de relativement haut niveau qui est par exemple le langage PYTHON. L'ensemble des modifications et de l'enrichissement des couches 2 et 3 est symbolisé par l'élément 80.

La couche 1 applicative comprend les lignes de commande 11 en langage haut niveau que va pouvoir aisément utiliser l'utilisateur externe de l'ordinateur personnel 81 afin de gérer, d'extraire des données, et même de modifier le cas échéant les bits 75 des registres internes 74 du serveur 83. Grâce à l'implémentation des modules de service 30 au niveau de la couche de modules de service 3, c'est-à-dire dans l'espace ordinateur personnel 81 et en amont de la boîte 4 à outils IPMI, la réalisation d'une gestion fine de ces registres internes 74 est rendue possible à l'utilisateur externe par l'intermédiaire de simples lignes de commande 11. Avantageusement, ces lignes de commande 11 peuvent être regroupées en un ou plusieurs scripts 12. Ainsi, le lancement d'un script 12 peut réaliser automatiquement au moment voulu plusieurs lignes de commande et remonter directement à l'affichage pour l'utilisateur externe plusieurs informations concernant les registres internes 74. De préférence, le langage utilisé pour le ou les scripts 12 et leurs modules (« librairies » en langue anglaise) est le langage PYTHON, lequel permet aussi la programmation objet. Ce langage permet en effet d'offrir facilement à l'utilisateur une interface en mode « interface de commande » ainsi que des modules à partir desquels le ou les scripts 12 peuvent être écrits par un utilisateur externe et réutilisés par l'utilisateur externe suivant.

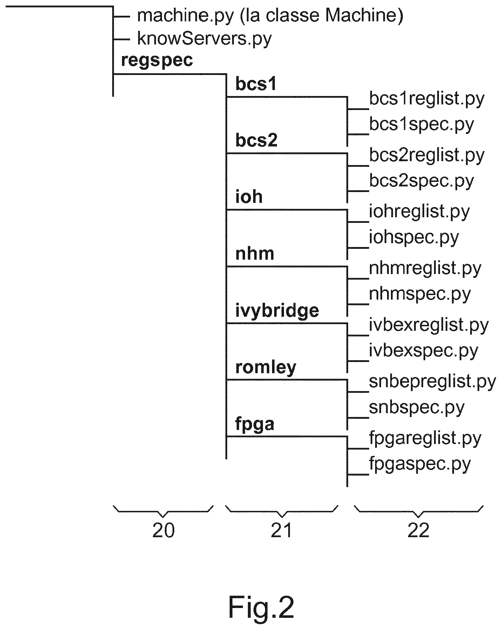

La figure 2 représente schématiquement un exemple d'arborescence des classes d'objet pour le langage PYTHON correspondant à l'architecture logicielle de la figure 1, selon un mode de réalisation de l'invention. A partir d'une racine 20 de l'arborescence, se déploie la liste de différents composants de calcul 21. De haut en bas, les trois premiers composants de calcul 21 sont des composants de type ASIC, les trois composants de calcul 21 suivants sont de type CPU, tandis que le dernier composant de calcul 21 est de type FPGA. A chaque composant 21, sont associés plusieurs fichiers 22, à savoir le fichier 22 de type « reglist » qui comprend la liste de tous les registres internes 74 du composant de calcul 21 concerné, tandis que le fichier 22 de type « spec » contient la description du contenu des différents registres internes 74 du composant de calcul 21 concerné. Ce sont ces fichiers 22 qui vont être utilisés par les modules de service 30 lors de la transformation des lignes de commande haut niveau issues de l'utilisateur externe en commandes d'accès de type IPMI directement compréhensibles par le processeur de service. Les fichiers 22 sont générés lors de la génération du système élémentaire d'entrée/sortie (BIOS pour « Basic Input Output System » en langue anglaise), au cours d'une étape supplémentaire dans ce processus de génération du système élémentaire d'entrée/sortie.

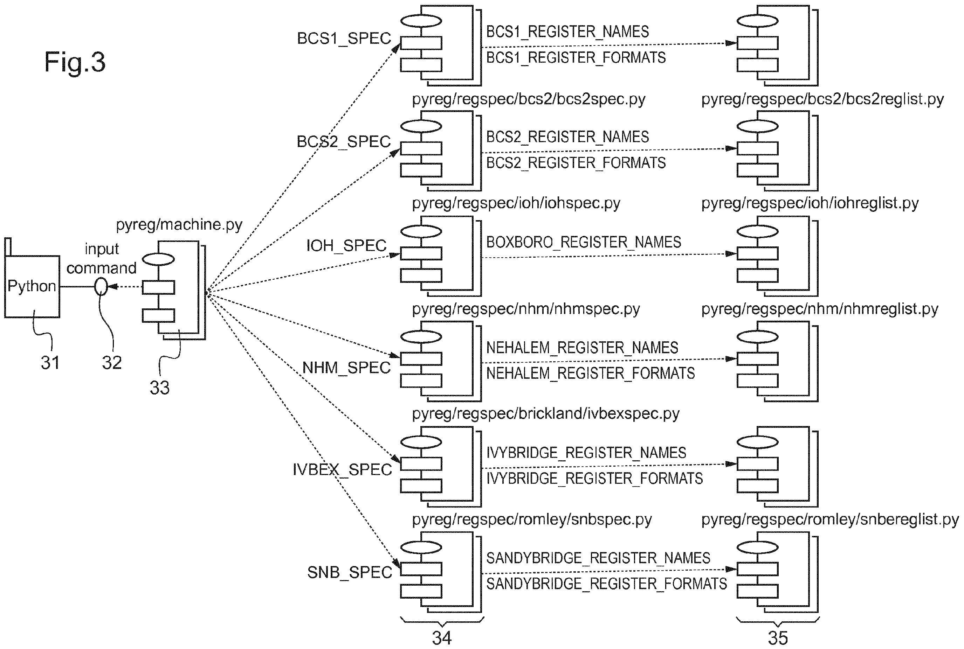

La figure 3 représente schématiquement un exemple de diagramme des composants pour le langage PYTHON correspondant à l'architecture logicielle de la figure 1, selon un mode de réalisation de l'invention. A une ligne de commande 32 écrite dans le langage PYTHON 31, le fichier 33 contenant la liste des composants de calcul peut aller chercher les informations manquantes à intégrer dans la ligne de commande 32, dans le fichier 34 concernant le contenu des registres internes de ce composant de calcul et dans le fichier 35 contenant le nom, l'adresse et le format d'adressage des registres internes de ce composant de calcul. Les fichiers 34 et 35 de la figure 3 détaillent les fichiers 22 de la figure 2.

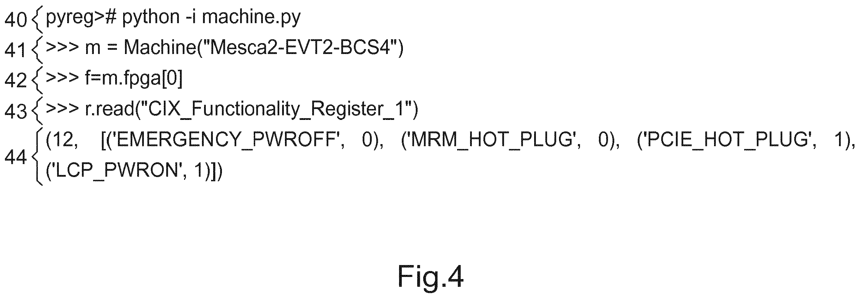

La figure 4 représente schématiquement un exemple de réponse à une ligne de commande de l'utilisateur externe, correspondant à l'architecture logicielle de la figure 1, selon un mode de réalisation de l'invention. La ligne 40 indique la remontée d'informations. La ligne 41 spécifie le type de serveur concerné, ici « Mesca2-EVT2-BCS4 ». La ligne 42 spécifie le type de composant de calcul concerné, ici « FPGA n°0 ». La ligne 43 spécifie à la fois le type d'opération de gestion concernée, ici la « lecture », et le type de registre interne concerné, ici « CIX_Functionality_Register_l », donc que le contenu du registre interne « CIX_Functionality_Register_1 » a été lu. La ligne 44 présente d'abord l'adresse du registre interne, ici « 12 », correspondant à un registre interne de 4 bits lesquels bits sont ensuite énumérés. Le nom du champ correspondant au premier bit du registre interne est ici « EMERGENCY_PWROFF » et sa valeur est à 0. Le nom du champ correspondant au deuxième bit du registre interne est ici « MRM_HOT_PLUG » et sa valeur est à 0. Le nom du champ correspondant au troisième bit du registre interne est ici « PCIE_HOT_PLUG » et sa valeur est à 1. Le nom du champ correspondant au quatrième bit du registre interne est ici « LCP_PWRON » et sa valeur est à 1. Les premier et quatrième bits concernent des états d'alimentation, tandis que les deuxième et troisième bits concernent des états de connexion. L'état des registres internes des composants de calcul donne une description de la configuration primaire du serveur pour que le système d'exploitation (OS pour « Operating System » en langue anglaise) puisse ensuite prendre le relai.

Bien entendu, la présente invention n'est pas limitée aux exemples et au mode de réalisation décrits et représentés, mais elle est susceptible de nombreuses variantes accessibles à l'homme de l'art.

## Revendications

1. Procédé d'accès à plusieurs registres internes (74) d'un serveur (83), comprenant :
- une transmission de commandes d'accès (11) en provenance d'un utilisateur externe au serveur (83) vers un processeur de service (82) du serveur (83), par l'intermédiaire d'un protocole de communication, IPMI, directement compréhensible par ledit processeur de service (82),
- un accès dudit processeur de service (82), auxdits registres internes (74), par l'intermédiaire d'un ou de plusieurs protocoles d'accès (61 à 63) auxdits registres internes (74),
- une transformation automatique de lignes de commande (11) émises par ledit utilisateur en lesdites commandes d'accès dans ledit protocole de communication, IPMI, par un ou plusieurs modules de service (30), le langage desdites lignes de commande (11) étant de plus haut niveau que ledit protocole de communication, IPMI, ledit ou lesdits modules de service (30) associant, aux noms desdits registres internes (74) contenus dans lesdites lignes de commande (11), au moins les adresses correspondantes desdits registres internes (74), dans lesdites commandes d'accès,
**caractérisé en ce que**, lors dudit accès dudit processeur de service (82) auxdits registres internes (74), commandé par ledit utilisateur, un éventuel risque de collision avec un accès de surveillance, auxdits registres internes (74), commandé directement par ledit processeur de service (82) afin de mettre à jour une copie du statut desdits registres internes (74), est géré par ledit processeur de service (82), le déroulement dudit accès de surveillance comprend au moins la succession d'une étape de reconfiguration d'un multiplexeur situé entre le processeur de service (82) et lesdits registres internes (74) et d'une étape de lecture d'au moins un desdits registres internes (74), et ledit risque de collision est évité en mettant en attente ledit accès commandé par ledit utilisateur pendant toutes les étapes du déroulement dudit accès de surveillance lequel ne sera pas interrompu.

2. Procédé d'accès selon la revendication 1, **caractérisé en ce que** ledit ou lesdits modules de service (30) associent, aux noms desdits registres internes (74) contenus dans lesdites lignes de commande (11), également les formats d'adressage correspondant auxdits registres internes (74), dans lesdites commandes d'accès.

3. Procédé d'accès selon l'une quelconque des revendications précédentes, **caractérisé en ce qu'**au moins l'un desdits modules de service (30) contient une liste des noms desdits registres internes (74) associant, auxdits noms, les adresses correspondantes desdits registres internes (74), ladite liste comprenant de préférence tous lesdits registres internes (74) susceptibles d'être accédés par ledit utilisateur, et **en ce que**, à chaque configuration du serveur (83), ladite liste est réactualisée.

4. Procédé d'accès selon la revendication 3, **caractérisé en ce que** ladite liste associe également, auxdits noms et auxdites adresses, la description de tous les bits (75) desdits registres internes (74).

5. Procédé d'accès selon l'une quelconque des revendications précédentes, **caractérisé en ce que** lesdites lignes de commande (11) peuvent être regroupées dans un ou plusieurs scripts (12).

6. Procédé d'accès selon l'une quelconque des revendications précédentes, **caractérisé en ce que** les lignes de commande (11) ne requièrent dudit utilisateur que le nom du registre interne (74) à accéder, à l'exclusion de son adresse, de son format d'adresse, et de son mode d'accès.

7. Procédé d'accès selon l'une quelconque des revendications précédentes, **caractérisé en ce que**, en réponse à une desdites lignes de commandes (11) dudit utilisateur, les valeurs des bits (75) desdits registres internes (74) sont affichées avec les noms de champs correspondant à ces bits (75).

8. Procédé d'accès selon l'une quelconque des revendications précédentes, **caractérisé en ce que** le langage desdites lignes de commande (11) est le langage PYTHON.

9. Procédé d'accès selon l'une quelconque des revendications précédentes, **caractérisé en ce que** ledit protocole de communication est le protocole IPMI.

10. Procédé d'accès selon la revendication 9, **caractérisé en ce que** ledit protocole de communication IPMI circule sur un bus Ethernet.

11. Procédé d'accès selon l'une quelconque des revendications précédentes, **caractérisé en ce que** lesdits registres internes (74) appartiennent à un ou plusieurs composants (71 à 73) du serveur, un ou plusieurs CPU et ou un ou plusieurs ASIC et ou un ou plusieurs FPGA pouvant se trouver parmi lesdits composants (71 à 73).

## Patentansprüche

1. Verfahren zum Zugreifen auf mehrere interne Register (74) eines Servers (83), umfassend:
- Übertragen von Zugriffsbefehlen (11) von einem Benutzer außerhalb des Servers (83) an einen Dienstprozessor (82) des Servers (83) über ein Kommunikationsprotokoll, IPMI,
das für den genannten Dienstprozessor (82) direkt verständlich ist,
- Zugreifen des Dienstprozessors (82) auf die internen Register (74) über ein oder mehrere Protokolle (61 bis 63) zum Zugreifen auf die internen Register (74),
- automatisches Umwandeln von Befehlszeilen (11), die von dem Benutzer ausgegeben werden, in die Zugriffsbefehle in dem Kommunikationsprotokoll, IPMI, durch ein oder mehrere Dienstmodule (30), wobei die Sprache der Befehlszeilen (11) eine höhere Ebene als das Kommunikationsprotokoll, IPMI, besitzt, wobei das oder die Dienstmodule (30) den Namen der internen Register (74), die in den Befehlszeilen (11) enthalten sind, mindestens die entsprechenden Adressen der internen Register (74) in den Zugriffsbefehlen zuordnen,
**dadurch gekennzeichnet, dass** bei dem Zugreifen des Dienstprozessors (82) auf die internen Register (74), das von dem Benutzer gesteuert wird, ein mögliches Kollisionsrisiko mit einem Überwachungszugriff auf die internen Register (74), der von dem Dienstprozessor (82) direkt gesteuert wird, um eine Kopie des Status der internen Register (74) zu aktualisieren, von dem Dienstprozessor (82) verwaltet wird, wobei der Ablauf des Überwachungszugriffs mindestens die Aufeinanderfolge eines Schritts eines Rekonfigurierens eines Multiplexers, der sich zwischen dem Dienstprozessor (82) und den internen Registern (74) befindet, und eines Schritts eines Lesens von mindestens einem der internen Register (74) umfasst, und das Kollisionsrisiko vermieden wird, indem der Zugriff, der von dem Benutzer gesteuert wird, während sämtlicher dieser Schritte des Ablaufs des Überwachungszugriffs, der nicht unterbrochen wird, zurückgestellt wird.

2. Zugriffsverfahren nach Anspruch 1, **dadurch gekennzeichnet, dass** das oder die Dienstmodule (30) den Namen der internen Register (74), die in den Befehlszeilen (11) enthalten sind, auch die Adressierungsformate, die den internen Registern (74) entsprechen, in den Zugriffsbefehlen zuordnen.

3. Zugriffsverfahren nach einem der vorstehenden Ansprüche,
**dadurch gekennzeichnet, dass** mindestens eines der Dienstmodule (30) eine Liste der Namen der internen Register (74) enthält, die den Namen die Adressen, die den internen Registern (74) entsprechen, zuordnet, die Liste umfassend vorzugsweise die sämtlichen internen Register (74), auf die der Benutzer zugreifen kann, und dass bei jeder Konfiguration des Servers (83) die Liste erneut aktualisiert wird.

4. Zugriffsverfahren nach Anspruch 3, **dadurch gekennzeichnet, dass** die Liste den Namen und den Adressen auch die Beschreibung der sämtlichen Bits (75) der internen Register (74) zuordnet.

5. Zugriffsverfahren nach einem der vorstehenden Ansprüche,
**dadurch gekennzeichnet, dass** die Befehlszeilen (11) in einem oder mehreren Skripten (12) umgruppiert werden können.

6. Zugriffsverfahren nach einem der vorstehenden Ansprüche,
**dadurch gekennzeichnet, dass** die Befehlszeilen (11) von dem Benutzer nur den Namen des internen Registers (74) verlangen, auf das zugegriffen werden soll, unter Ausschluss seiner Adresse, seines Adressformats und seines Zugriffsmodus.

7. Zugriffsverfahren nach einem der vorstehenden Ansprüche,
**dadurch gekennzeichnet, dass** als Reaktion auf eine der Befehlszeilen (11) des Benutzers die Werte der Bits (75) der internen Register (74) mit den Namen der Felder, die diesen Bits (75) entsprechen, angezeigt werden.

8. Zugriffsverfahren nach einem der vorstehenden Ansprüche,
**dadurch gekennzeichnet, dass** die Sprache der Befehlszeilen (11) die Sprache PYTHON ist.

9. Zugriffsverfahren nach einem der vorstehenden Ansprüche,
**dadurch gekennzeichnet, dass** das Kommunikationsprotokoll das IPMI-Protokoll ist.

10. Zugriffsverfahren nach Anspruch 9, **dadurch gekennzeichnet, dass** das IPMI-Kommunikationsprotokoll auf einem Ethernet-Bus zirkuliert.

11. Zugriffsverfahren nach einem der vorstehenden Ansprüche,
**dadurch gekennzeichnet, dass** die internen Register (74) zu einer oder mehreren Komponenten (71 bis 73) des Servers gehören, wobei sich eine oder mehrere CPUs und oder eine oder mehrere ASIC und oder ein oder mehrere FPGA unter den Komponenten (71 bis 73) befinden können.

## Claims

1. An access method of multiple internal registers (74) of a server (83), comprising:
- a transmission of access commands (11) from a user external to the server (83) to a service processor (82) of the server (83), via a communication protocol, IPMI, directly comprehensible by said service processor (82),
- an access of said service processor (82), to said internal registers (74), via one or more access protocols (61 to 63) to said internal registers (74),
- an automatic transformation of command lines (11) transmitted by said user into said access commands in said communication protocol, IPMI, by one or more service modules (30), the language of said command lines (11) being of a higher level than said communication protocol, IPMI, said service module or modules (30) associating, to the names of said internal registers (74) contained in said command lines (11), at least the corresponding addresses of said internal registers (74), in said access commands,
**characterized in that,** upon said access of said service processor (82) to said internal registers (74), controlled by said user, a possible risk of collision with a monitoring access, to said internal registers (74), controlled directly by said service processor (82) in order to update a copy of the status of said internal registers (74), is managed by said service processor (82), the implementation of said monitoring access comprises at least the sequence of a reconfiguration step of a multiplexer located between the service processor (82) and said internal registers (74) and a step of reading at least one of said internal registers (74), and said risk of collision is avoided by putting on hold said access controlled by said user during all the implementation steps of said monitoring access which will be uninterrupted.

2. The access method according to claim 1, **characterized in that** said service module or modules (30) associate, to the names of said internal registers (74) contained in said command lines (11), also the addressing formats corresponding to said internal registers (74), in said access commands.

3. The access method according to any one of the preceding claims, **characterized in that** at least one of said service modules (30) contains a list of the names of said internal registers (74) associating, with said names, the corresponding addresses of said internal registers (74), said list preferably comprising all said internal registers (74) capable of being accessed by said user, and **in that**, with each configuration of the server (83), said list is updated.

4. The access method according to claim 3, **characterized in that** said list also associates, with said names and said addresses, the description of all the bits (75) of said internal registers (74).

5. The access method according to any one of the preceding claims, **characterized in that** said command lines (11) can be grouped into one or more scripts (12).

6. The access method according to any one of the preceding claims, **characterized in that** the command lines (11) only require from said user the name of the internal register (74) to access, to the exclusion of its address, its address format, and its access mode.

7. The access method according to any one of the preceding claims, **characterized in that**, in response to one of said command lines (11) of said user, the values of the bits (75) of said internal registers (74) are displayed with the field names corresponding to these bits (75).

8. The access method according to any one of the preceding claims, **characterized in that** the language of said command lines (11) is the PYTHON language.

9. The access method according to any one of the preceding claims, **characterized in that** said communication protocol is the IPMI protocol.

10. The access method according to claim 9, **characterized in that** said IPMI communication protocol transmits over an Ethernet bus.

11. The access method according to any one of the preceding claims, **characterized in that** said internal registers (74) belong to one or more components (71-73) of the server, one or more CPUs and or one or more ASICs and or one or more FPGAs which may be present among said components (71-73).
